# EUROPEAN PATENT SPECIFICATION

(11) **EP 1 354 006 B1**
(45) Date of publication and mention of the grant of the patent: **08.08.2007**
(21) Application number: 00992455.6
(22) Date of filing: 29.12.2000
(51) Int. Cl.: C09B 67/02, A23L 1/275, C09B 61/00

(54) **MANUFACTURING PROCESS OF SPHEROIDAL FOOD DYES**
VERFAHREN ZUR HERSTELLUNG NAHRUNGSFARBSTOFFEN IN GRANULATFORM
PROCEDE DE FABRICATION DE GRANULES SPHEROIDAUX DE COLORANTS ALIMENTAIRES

(43) Date of publication of application: 22.10.2003
(73) Proprietor: Roha Dyechem Private Limited, Mumbai 400 003 (IN)
(72) Inventor: TIBREWALA, Ramakant Jagdishprasad, Mumbai 400 063 (IN)
(74) Representative: Ungria Lopez, Javier
(86) International application number: PCT/IN2000/000134
(87) International publication number: WO 2002/053652

(56) References cited:
- WO-A-89/00079
- WO-A-98/17729
- FR-A- 2 179 137
- FR-A- 2 645 164
- US-A- 3 579 719
- US-A- 3 775 331
- US-A- 5 507 991

## Description

This invention relates to a manufacturing process of spheroidal shaped food dye granules, more particularly a spheroidal shaped food dye granule made from food colors: (FD & C dyes, acid dyes, D & C dyes, synthetic dyes and blends of synthetic dyes).

Under the prior art, a food dye granule is prepared from food colors (FD & C dyes, acid dyes, D & C dyes, synthetic dyes and blends of synthetic dyes) wherein the raw materials are subjected to the following steps viz. drying of the slurry, reduction of the dried product into an ultra fine state in a pulveriser, charging the powder by a process of compacting, transforming the compacted material into a cadmill, where the same is run through and crushed by rotating blades to get granules of desired size, charging the cadmilled material to a vibratory sifter for uniform segregation of granules.
The food dye granules obtained by the aforementioned process had certain shortfalls in that the dye granules are irregular in shape and size, having sharp edges which have a tendency to easily disintegrate into dust form (as they are formed by dry compaction process) making it difficult to handle.

The object of the present invention is a process that eliminates the cause of breakage of edges which is the prime reason for dust generation during transit when the finished product has all the characteristics of a dust free product. The objective of the present invention is. thus to produce dust less, easily soluble, porous, uniform spheroidal shaped granules of food colors (FD & C dyes, acid dyes, D & C dyes, synthetic dyes and blends of synthetic dyes).

Processes of manufacturing dye granules that are dust free have been described in:
- FR 2179 137: These granules contain one or more coloring agents soluble in water, a dispersing agent and/or a wetting agent, a binding agent and o to 50% in weight of other additives. Though the CIBA invention discusses manufacture of coloring granules which on one hand have enough cohesion of the particle and on the other hand unaltered solubility, the solubility of the granules is adjusted at the time of manufacturing with the help of binding agents, dispersing agents or the wetting agents and other additives, so that the granules have a stable form and are not friable and remain regarding the wetting or the solubility, in conformity to the requirements of the application. The unaltered solubility and cohesion of the particles within themselves are achieved by the use of dispersing agents and other additives which are not permissible in the food industry. The process of granule formation involves mixing a pressed cake of the coloring agent and the definite components (like dispersing/wetting agent, a binding agent, a charge agent and other additives) in a mixing bowl, then granulating the paste with the help of a granulating machine followed by drying with hot or cold air under controlled temperature as the reactant coloring agent is highly sensitive. The granulating machine comprises of a granulation drum (roller) wherein the product is put or on a plate by spraying a solvent (like water, alcohol etc.) simultaneously to obtain granules in different shapes like grains, flakes, spheres, cylinders, tablets etc.
- WO 98/17729: describes a process for preparing organic pigment granules with particle size from 0.5 mm to 4.0 mm. The pigment granules comprise a mixture of at least one organic pigment and a binder. The mixture is pressed in a continuously operating apparatus through one or more apertures each having a 0.2 mm² to 5.0 mm², the apparatus consisting of one conveying device and a shaping section comprising of apertures and being constructed and operated with a throughput such that the pressure in its shaping section does not exceed 10 bar. If desired - the cylindrical granules emerging from the dies are converted on a rotating device into ovoid or spheroidal granules. The granulated product is dried at a temperature of - 50°C to 200°C at atmospheric pressure or under reduced pressure. The cylindrical extrudates usually break up on their own accord on emergence from the shaping section into pieces with a length of about 2 mm to 6 mm. The rotating device which converts the cylindrical granules into spheroidal granules can be for example a plate, a hollow cylinder or like. The cylindrical material emerging from the extruder is preferably passed directly onto roughly the center of the rotating device, centrifugal force setting the cylindrical granules into a rolling movement and so converting them into more or less spheroidal granules. Conversion into ovoid or spheroidal granules is optional. The granulated product is dried batch wise or continuously. On account of its properties, the pigment granules are highly suitable for pigmenting high molecular mass organic material, specially plastics and coatings.

The known processes to produce dust free dye granules for the food industry have not been able to meet the market expectations of a dust free dye granule that does not generate dust during transit or handling. This industry requires specialized products that are highly safe and hygienic for internal consumption and external application in any form for human beings.

### DESCRIPTION OF THE INVENTION

The present invention refers to a process of manufacturing spheroidal shaped food dye granules comprising the following steps:
i) mixing powdered food color of ultrafine particle size as starting material, with water in a blender (1) during a mixing time of 15 minutes at 60 rpm, at a temperature in the range of 35 to 80°C to obtain a blended mixture of water and food color;
ii) charging the blended mixture of water and food color into a radial noodler (2), which comprises a hopper and a perforated roller assembly (4) which comprises a perforated roller (5) and a second roller(6) wherein the blended mixture is transformed into noodles which are further cut into uniform sized noodles by a cutter (20) fixed on the perforated roller assembly;
iii) gravity charging the uniform sized noodles into a preheated spheroidizer (7) at a temperature between 40°C and 85°C, said spheroidizer (7) containing a bowl (8) with a rotatory chequered plated bottom (9); wherein the noodles are subjected to a centrifugal action and impact forces at the rate of 500 rpm to 1500 rpm which make the noodles to continuously collide against the wall of the bowl (8) and return to the centre, thus transforming the noodles into uniform sized spheroidal shaped granules; and
iv) drying the uniform sized spheroidal shaped granules.

The food colors can be FD and C dyes, acid dyes, D and C dyes, synthetic dyes and blends of synthetic dyes. The raw materials are subjected to the following steps viz. spray drying the powder and reducing it to an ultra fine state, mixing the powder with water, charging the blended wet powder mix (hereinafter the "blended mixture") into a radial noodler (2), collecting the precipitate into a hopper, and processing the precipitate into the spheroidizer (7) till spheroidal shaped dye granules are formed, which are further dried to produce uniformly sized spheroidal dye granules.

### DESCRIPTION OF AN EMBODIMENT OF THE INVENTION

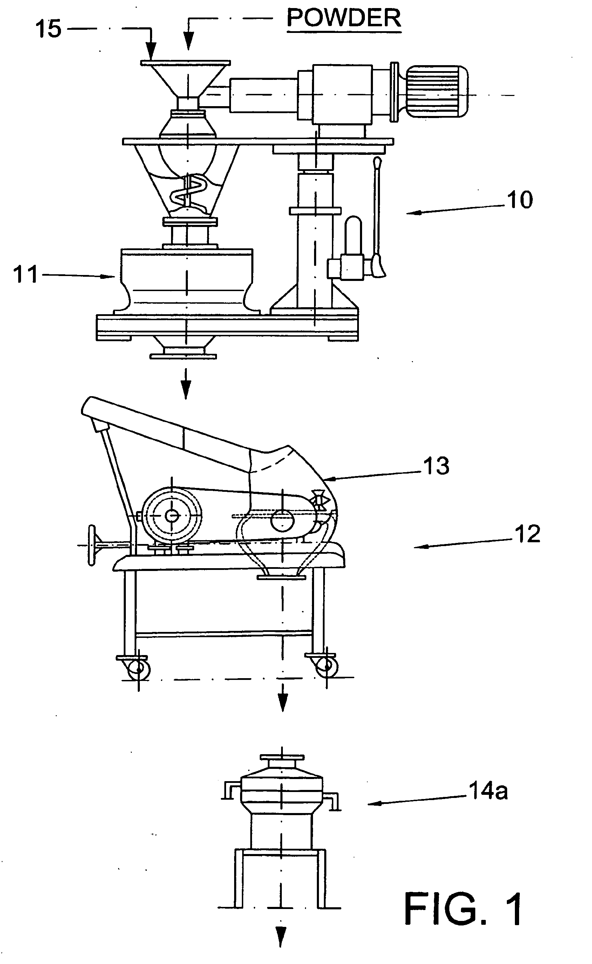

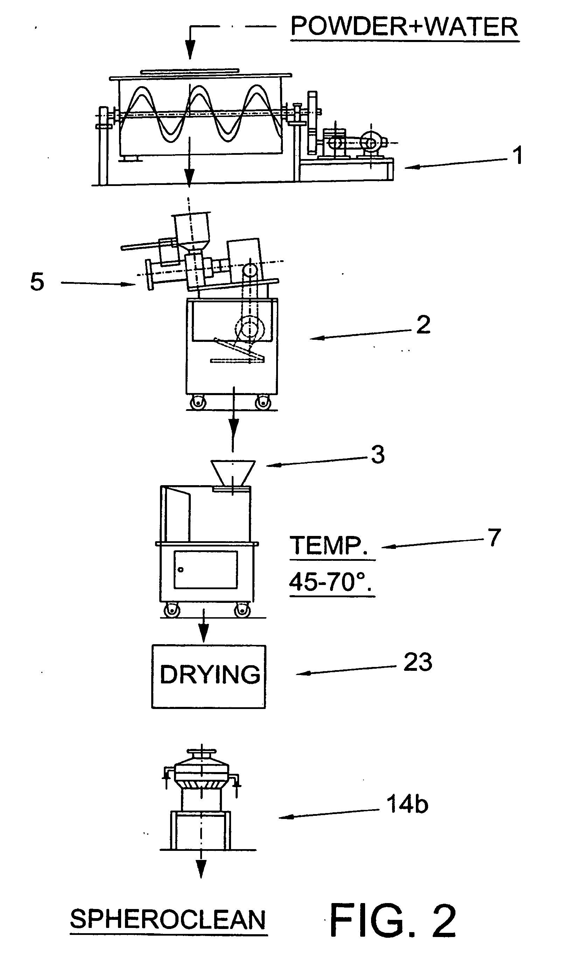

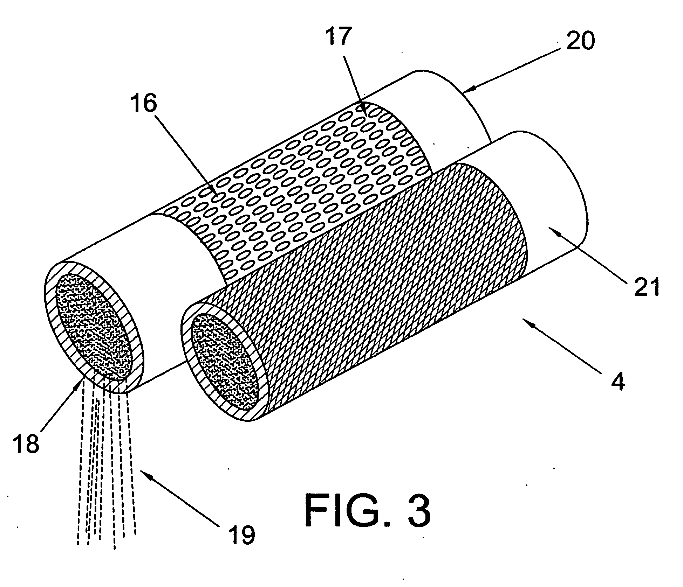

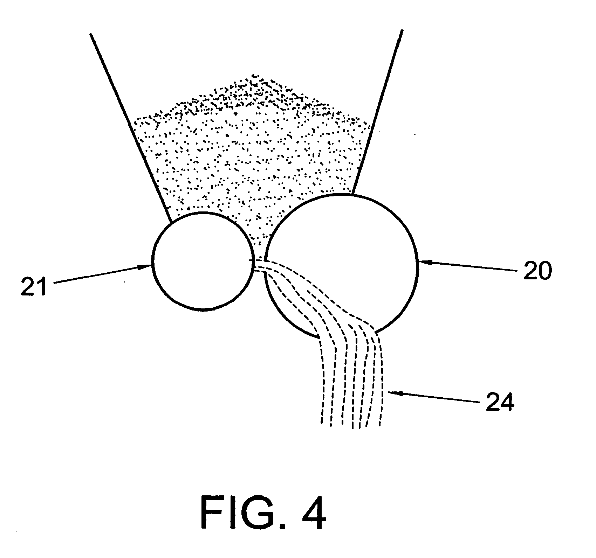

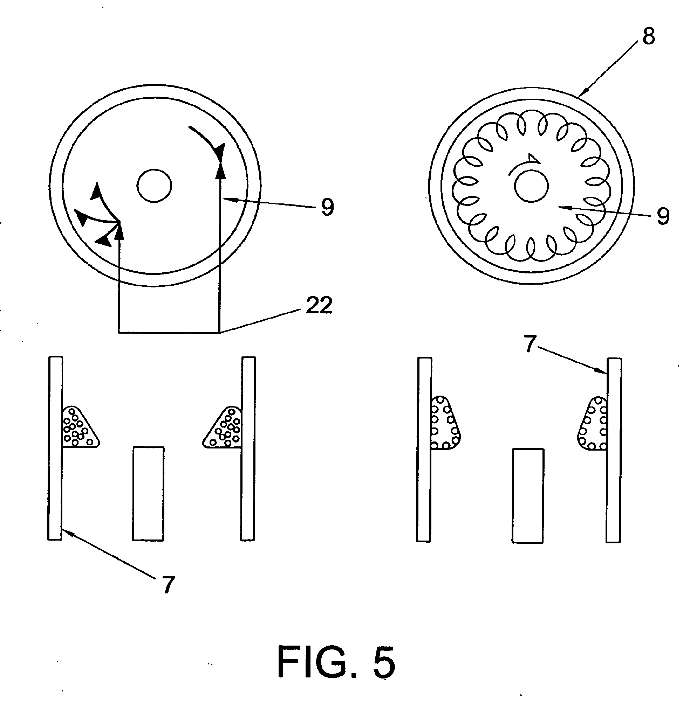

Under the known processes of manufacture of a food dye granule, raw material which is generally in liquid form is dried in the spray drier to obtain a powder form of raw material. This powder form of raw material which is in an agglomerated state is subjected to pulverization in the pulveriser to uniformly reduce it to a uniform ultra fine state. This spray dried ultra fine powder is charged in the compactor (10) (figure 1) by controlling the speed of the conveyor by being pressed through the fixed roller gap (11) which are rotating axially in the forward direction. This powder is compacted into flakes. The flake shaped product is then transferred into a cadmill (12) (figure 1), maintained at a temperature higher than the room temperature, where they are struck and crushed by blades (13) fixed on the cadmill to produce granules of desired size. The granules so formed are then sieved through a vibratory sifter (14a) to collect irregular shaped granules. The granules so formed have a tendency to disintegrate into dust form which makes it difficult to handle. The granules so obtained by the above process have an affinity to absorb moisture due to high operating temperature.

According to the process of the present invention the raw material which is in the form of liquid is subjected to drying in the spray drier to obtain a powder form of raw material. The resultant product is a mixture of powder in fine and agglomerated state which is pulverized (grinded) in the pulveriser to uniformly reduce the particle size to ultra fine state. This raw material in ultrafine powder form is weighed and loaded to the blender (1). In the blender, the ultra fine powder is mixed with water at 60 rpm for 15 minutes. The temperature of the blender is maintained at 35° C to 80° C. Water is sprayed into the blender through the spray nozzle (15) at ambient temperature.

The blended mixture is then charged into the radial noodler (2) through the hopper with feed scraper (3). The hopper has an inlet and an outlet through which the blended mixture passes on to the perforated roller (5) comprised in the perforated roller assembly (4).

The perforated roller assembly (4) has a multiple number of perforations (16) with each perforation having an entry bore (17) and an exit bore (18) which extends from the outside of the perforated roller (5) to the inside of the perforated roller (5) with pore size of about 0.28 inches (7.112 mm) to 0.032 inches (0.8128 mm).
The blended mixture when charged through the roller (5) results in the formation of noodles (19). The noodles produced are simultaneously cut into regular lengths with the help of an cutter (20) fixed on the perforated roller assembly (4).

The non dusty, non agglomerated uniform sized noodles are collected in the hopper fitted with controlled discharge valve (21). The uniform sized noodles are gravity charged into the spheroidizer (7). The spheroidizer (7) is preheated from about 40° C to 85° C which is maintained through out the process of spheroidization.

In the spheroidizer (7), the noodles are rotated in a fixed bowl (8), with a bottom of chequered plate (9) rotating at about 500 rpm to 1500 rpm. The noodles while rotating, collide against the wall of the bowl and return towards the center of the bowl (8), and then again move towards the wall producing uniformly spheroidal granules, due to centrifugal action and impact forces (22).

The size of the spheroids is determined by the screen size of the perforated roller (5) of the radial noodler (2). The moisture content of the product ranges from about 15% to 30% before drying.

The uniform sized, spheroidal shaped product obtained is dried in a drier (23), wherein the moisture content of spheroidal granules thus produced is reduced. These spheroidal granules so formed are sieved through the vibratory sifter (14b) to collect uniform sized, spheroidal shaped granules.

The method and apparatus used in the invention are very effective and have a significant contribution to the production of the new food color granules (FD & C dyes, acid dyes, D & C dyes, synthetic dyes and blends of synthetic dyes). They are very simple in the manner of their performance and / or operation.

The salient features of the present invention which distinguish it from the prior granules of synthetic food colors (FD & C dyes, acid dyes, D & C dyes, synthetic dyes and blends of synthetic dyes) are:
- the dye granules do not disintegrate or form dust while handling or transportation;
- the spheroidal granules have high solubility and reduced abrasion,
- the spheroidal dye granules made by the above referred inventive process are developed on a simple principle wherein the powder is compacted in the presence of water to form spheroidal shaped uniform granules which have no sharp edges to break off to create color dust;
- the method and apparatus adopted for the invention have resulted in a uniformly sized, spheroidal product which reduces friability to a great extent during handling and transportation;
- the invention is cost effective when compared to other products in use;
- the invention is more efficient with negligible losses when compared to other known methods in use.

**EXAMPLES OF SPHEROCLEAN SYNTHETIC DYES**

| s.No. | COMMON NAME | COLOR INDEX NO. | FD and C no. | EEC no. |
|---|---|---|---|---|
| 1. | Allura Red AC | 16035 | Red 40 | E129 |
| 2. | Erythrosine | 45430 | Red 3 | E127 |
| 3. | Tartrazine | 19140 | Yellow 5 | E102 |
| 4. | Sunset Yellow | 15985 | Yellow 6 | E110 |
| 5. | Brilliant Blue FCF | 42090 | Blue 1 | E133 |
| 6. | Indigo Carmine | 73015 | Blue 2 | E132 |
| 7. | Amaranth | 16185 | - | E123 |
| 8. | Carmoisine | 14720 | - | E122 |
| 9. | Ponceau 4R | 16255 | - | E124 |
| 10. | Quinoline Yellow W.S. | 47005 | - | E104 |
| 11. | Green - S | 44090 | - | E142 |
| 12. | Red 2G | 18050 | - | E128 |
| 13. | Patent Blue V | 42051 | - | E131 |
| 14. | Brown HT | 20285 | - | E155 |
| 15. | Black PN | 28440 | - | E151 |
| 16. | Sunset Yellow C.S. | | - | E110 |

## Claims

1. A process of manufacturing spheroidal shaped food dye granules comprising the following steps:
i) mixing powdered food color of ultrafine particle size as starting material, with water in a blender (1) during a mixing time of 15 minutes at 60 rpm, at a temperature in the range of 35 to 80°C to obtain a blended mixture of water and food color;
ii) charging the blended mixture of water and food color into a radial noodler (2), which comprises a hopper and a perforated roller assembly (4) which comprises a perforated roller (5) and a second roller(6) wherein the blended mixture is transformed into noodles which are further cut into uniform sized noodles by a cutter (20) fixed on the perforated roller assembly;
iii) gravity charging the uniform sized noodles into a preheated spheroidizer (7) at a temperature between 40°C and 85°C, said spheroidizer (7) containing a bowl (8) with a rotatory chequered plated bottom (9); wherein the noodles are subjected to a centrifugal action and impact forces at the rate of 500 rpm to 1500 rpm which make the noodles to continuously collide against the wall of the bowl (8) and return to the centre, thus transforming the noodles into uniform sized spheroidal shaped granules; and
iv) drying the uniform sized spheroidal shaped granules.

2. A process according to claim 1 **characterized in that** the food dye granules are formed from FD and C dyes, D and C dyes, acid dyes, synthetic dyes and blends of synthetic dyes.

3. A process according to claim 1, **characterized in that** the perforated roller assembly (4) has a multiple number of perforations (16) with each perforation having an entry bore (17) and an exit bore (18) which extends from the outside of a perforated roller to the inside of a perforated roller with pore size of about 0.28 inches (7.112 mm) to 0.032 inches (0.8128 mm).

4. A process according to claim 1, **characterized in that** the spheroidal dye granules have a size which is determined by the screen size of the perforated roller assembly (4) of the radial noodler (2).

5. A process according to claim 1, **characterized in that** the spheroidal shaped dye granules have a moisture content between about 15% to 30% before drying.

6. A process according to claim 1, **characterized in that** the spheroidal shaped dye granules are sieved through a vibratory sifter (14b).

## Patentansprüche

1. Verfahren zur Herstellung von Nahrungsfarbstoffen in Granulatform, das die folgenden Schritte aufweist:
(i) Mischen von pulverförmiger Nahrungsmittelfarbe, die eine ultrafeine Teilchengröße aufweist, als Ausgangsmaterial mit Wasser in einem Mischer (1) während einer Mischzeit von 15 Minuten bei 60 U/min bei einer Temperatur im Bereich von 35 bis 80 °C, um eine durchmischte Mischung aus Wasser und Nahrungsmittelfarbe zu erhalten;
(ii) Eingeben der durchmischten Mischung aus Wasser und Nahrungsmittelfarbe in eine Radial-Nudelmaschine (2), die einen Einfülltrichter und eine perforierte Walzenanordnung (4), die eine perforierte Walze (5) und eine zweite Walze (6) umfasst, aufweist, wobei die durchmischte Mischung zu Nudeln umgeformt wird, die weiterhin in gleichförmig dimensionierte Nudeln durch eine Schneideinrichtung (20), die an der perforierten Walzenanordnung befestigt ist, geschnitten werden;
(iii) Einfüllen unter Schwerkraft der gleichförmig dimensionierten Nudeln in einen vorgewärmten Granulierer (7) bei einer Temperatur zwischen 40 °C und 85 °C, wobei der Granulierer (7) eine Wanne (8) mit einem drehbar geriffelten, plattierten Boden (9) enthält; wobei die Nudeln einer Zentrifugalwirkung und Aufprallkräften unter einer Rate von 500 U/min bis 1500 U/min unterworfen werden, was dazu führt, dass die Nudeln fortlaufend gegen die Wand der Schale (8) auftreffen und zu der Mitte zurückkehren, was die Nudeln in gleichförmig dimensioniertes, kugelförmiges Granulat umformt; und
(iv) Trocknen des gleichförmig dimensionierten, kugelförmigen Granulats.

2. Verfahren nach Anspruch 1, **dadurch gekennzeichnet, dass** die Nahrungsmittelfarbstoffgranulate aus FD- und C-Farbstoffen, D- und C-Farbstoffen, sauren Farbstoffen, synthetischen Farbstoffen und Mischungen aus synthetischen Farbstoffen gebildet sind.

3. Verfahren nach Anspruch 1, **dadurch gekennzeichnet, dass** die perforierte Walzenanordnung (4) eine Vielzahl Perforationen (16) besitzt, wobei jede Perforation eine Eingangsbohrung (17) und eine Ausgangsbohrung (18) besitzt, die sich von der Außenseite einer perforierten Walze zu der Innenseite einer perforierten Walze erstreckt, wobei die Porengröße ungefähr 0,28 Inch (7,112 mm) bis 0,032 Inch (0,8128 mm) beträgt.

4. Verfahren nach Anspruch 1, **dadurch gekennzeichnet, dass** der Farbstoff in Granulatform eine Größe hat, die durch die Siebgröße der perforierten Walzenanordnung (4) der Radial-Nudelmaschine (2) bestimmt ist.

5. Verfahren nach Anspruch 1, **dadurch gekennzeichnet, dass** der Farbstoff in Granulatform einen Feuchtigkeitsgehalt zwischen ungefähr 15 % bis 30 % vor dem Trocknen besitzt.

6. Verfahren nach Anspruch 1, **dadurch gekennzeichnet, dass** der Farbstoff in Granulatform durch eine Vibrationssiebeinrichtung (14b) gesiebt wird.

## Revendications

1. Procédé de fabrication de granules de teinte alimentaire de forme sphéroïdale comprenant les étapes suivantes consistant à :
i) mélanger un colorant alimentaire en poudre de taille de particule ultrafine comme matière de départ, avec de l'eau dans un mélangeur (1) pendant un temps de mélange de 15 minutes à 60 tours/min, à une température dans la gamme de 35 à 80 °C pour obtenir une mixture mélangée d'eau et de colorant alimentaire ;
ii) charger la mixture mélangée d'eau et de colorant alimentaire dans un appareil à nouilles radial (2), qui comprend une trémie et un ensemble de rouleaux perforés (4) qui comprend un rouleau perforé (5) et un second rouleau (6) dans lequel la mixture mélangée est transformée en nouilles qui sont en outre coupées en nouilles de taille uniforme par une coupeuse (20) fixée sur l'ensemble de rouleaux perforés ;
iii) charger par gravité les nouilles de taille uniforme dans un appareil de sphéroïdisation préchauffé (7) à une température entre 40 °C et 85 °C, ledit appareil de sphéroïdisation (7) contenant un bol (8) avec un fond plat rotatif en damier (9) ; dans lequel les nouilles sont soumises à une action centrifuge et des forces d'impact à la vitesse de 500 tours/min à 1 500 tours/min pour amener les nouilles à frapper en continu la paroi du bol (8) et à revenir vers le centre, transformant ainsi les nouilles en des granules de forme sphéroïdale de taille uniforme ; et
iv) sécher les granules de forme sphéroïdale de taille uniforme.

2. Procédé selon la revendication 1, **caractérisé en ce que** les granules de teinte alimentaire sont formées de teintes FD et C, de teintes D et C, de teintes acides, de teintes synthétiques et de mélanges de teintes synthétiques.

3. Procédé selon la revendication 1, **caractérisé en ce que** l'ensemble de rouleaux perforés (4) comprend un nombre multiple de perforations (16), chaque perforation comportant un alésage d'entrée (17) et un alésage de sortie (18) qui s'étend de l'extérieur d'un rouleau perforé à l'intérieur d'un rouleau perforé avec une taille de pore d'environ 7,112 mm (0,28 pouce) à 0,8128 mm (0,032 pouce).

4. Procédé selon la revendication 1, **caractérisé en ce que** les granules de teinte de forme sphéroïdale ont une taille qui est déterminée par la taille de tamis de l'ensemble de rouleaux perforés (4) de l'appareil à nouilles radial (2).

5. Procédé selon la revendication 1, **caractérisé en ce que** les granules de teinte de forme sphéroïdale ont une teneur en humidité comprise entre environ 15 % et 30 % avant séchage.

6. Procédé selon la revendication 1, **caractérisé en ce que** les granules de teinte de forme sphéroïdale sont tamisées à travers un tamiseur vibratoire (14b).
